(19) Europäisches Patentamt
European Patent Office
Office européen des brevets

(11) **EP 3 466 754 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(51) Int Cl.:
***B60Q 1/115*** *(2006.01)*

(21) Anmeldenummer: **18188618.5**

(22) Anmeldetag: **13.08.2018**

(54) **VERFAHREN UND VORRICHTUNG ZUR LEUCHTWEITENEINSTELLUNG EINES SCHEINWERFERS**

METHOD AND DEVICE FOR ADJUSTING THE INCLINATION OF A HEADLAMP

PROCÉDÉ ET DISPOSITIF DE RÉGLAGE DE LA PORTÉE LUMINEUSE D'UN PHARE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2017 DE 102017123364**

(43) Veröffentlichungstag der Anmeldung:
**10.04.2019 Patentblatt 2019/15**

(73) Patentinhaber: **MAN Truck & Bus SE**
**80995 München (DE)**

(72) Erfinder:
• **Gerritzen, Ralph**
**82110 Germering (DE)**
• **Mendler, Hardy**
**85221 Dachau (DE)**

(74) Vertreter: **v. Bezold & Partner Patentanwälte - PartG mbB**
**Akademiestraße 7**
**80799 München (DE)**

(56) Entgegenhaltungen:
DE-A1- 10 224 522     DE-A1-102006 024 367
DE-A1-102011 081 395     DE-A1-102015 003 590

**Beschreibung**

Die Erfindung betrifft ein Verfahren und eine Vorrichtung zum Einstellen einer Leuchtweite eines Scheinwerfers eines Kraftfahrzeugs, insbesondere eines Nutzfahrzeugs.

Bekannt sind Fahrzeugscheinwerfer, deren Leuchtweite reguliert werden kann, indem die Lichtemissionsrichtung des Scheinwerfers um eine horizontale Achse geschwenkt wird. Es ist beispielsweise möglich, den Reflektor oder das ganze Scheinwerfermodul zu schwenken. Für eine automatische Leuchtweitenregulierung eines solchen Scheinwerfers wird der Nickwinkel des Fahrzeugs gemessen. Hierfür werden herkömmlicherweise Höhensensoren an der Vorder- und Hinterachse verwendet, welche den Abstand der jeweiligen Achse von der federnd gelagerten Karosserie messen. Aus diesen Messwerten und dem Achsabstand kann der Nickwinkel des Fahrzeugs berechnet werden Es ist auch möglich, den Nickwinkel direkt mittels Neigungssensoren zu erfassen.

In der Bundesrepublik Deutschland schreibt der Gesetzgeber beispielsweise derzeit eine für das Fahrzeug zwingende automatische Leuchtweitenregulierung (LWR) vor, wenn die Lichtquelle eines Scheinwerfers (zum Beispiel Xenon-/LED-Scheinwerfer) einen Soll-Lichtstrom von 2000 Lumen überschreitet.

Die DE 10 2011 081 395 A1 offenbart, dass ein Nickwinkel eines Fahrzeugs durch einen Wegaufnehmer (d. h. ein Wegsensor) an der Hinterachse bestimmt werden kann. Es ist dann beispielsweise nur noch ein Wegaufnehmer an der Hinterachse notwendig, um die Neigung des Fahrzeugs zu ermitteln.

Aus der DE 102 24 522 A1 ist eine Niveauregelanlage für ein Kraftfahrzeug bekannt, welche den Abstand zwischen einem Fahrzeugaufbau und den Fahrzeugachsen, den Radaufhängungen oder den Rädern regelt. Höhensensoren ermitteln den Abstand zwischen dem Fahrzeugaufbau und den Fahrzeugachsen, den Radaufhängungen oder den Rädern. Aus den Höhensignalen der Höhensensoren wird ein Nickwinkel des Fahrzeugaufbaus gegenüber den Fahrzeugachsen ermittelt. Das Nickwinkelsignal kann einem Leuchtweitensteuergerät oder einer Leuchtweitenstelleinrichtung zugeführt werden.

Aus der DE 10 2015 003590 A1 ist ein Verfahren zur Niveauregulierung eines Fahrzeugs bekannt. Das Kraftfahrzeug umfasst Funktionseinheiten, die von der Niveauregulierung betroffen sind und auf die Niveauregulierung einwirken. Solche Funktionseinheiten können das Beleuchtungssystem des Fahrzeugs umfassen, wenn beispielsweise eine Niveauregulierung zur Vermeidung der Blendung des entgegenkommenden Verkehrs gemäß einer Variante gewünscht wird.

Der Erfindung liegt die Aufgabe zu Grunde, ein Verfahren und eine Vorrichtung zu schaffen, mit der eine besonders einfache Leuchtweitenregulierung eines Kraftfahrzeugscheinwerfers ermöglicht wird.

Die Aufgabe wird gelöst durch ein Verfahren und eine Vorrichtung gemäß den unabhängigen Ansprüchen. Vorteilhafte Weiterbildungen sind in den abhängigen Ansprüchen und der Beschreibung angegeben.

Das Verfahren dient zum Einstellen einer Leuchtweite eines Scheinwerfers eines Kraftfahrzeugs, insbesondere eines Nutzfahrzeugs, wobei das Kraftfahrzeug eine Hinterachse mit einer Hinterachsluftfederanlage zur Niveauregulierung der Hinterachse aufweist. Das Verfahren weist das Erfassen mindestens eines Druckwerts der Hinterachsluftfederanlage auf. Das Verfahren weist das Verändern der Leuchtweite des Scheinwerfers basierend auf dem mindestens einen erfassten Druckwert (z. B. mittels Verstellen eines Neigungswinkels des Scheinwerfers) auf.

Das vorgeschlagene Verfahren benötigt lediglich mindestens einen Drucksensor einer Hinterachsluftfederanlage und ist damit vergleichsweise unkompliziert und kostengünstig zu realisieren. Beispielsweise werden keine kostspieligen und komplizierten Wegsensoren samt Gestänge an der Vorderachse und der Hinterachse zum Bestimmen des Nickwinkels benötigt. In diesem Zusammenhang entfällt auch die Auswerteelektronik inklusive Software der Wegsensoren. Aufgrund der lediglich mindestens einen Eingangsgröße (Druckwert(e)) ergibt sich ein robustes und leistungsfähiges Verfahren. Zusätzlich wird ermöglicht, dass keine neuen Bauteile am Kraftfahrzeug zum Ausführen des Verfahrens vorgesehen werden müssen, da das Verfahren den oder die Drucksensoren der Hinterachsluftfederanlage verwendet, die ohnehin zum Regeln der Hinterachsluftfederanlage vorgesehen sind. Folglich kann auf eine Bauteilqualifikation verzichtet werden und es kann eine schnelle Implementierung des Verfahrens in heutigen Serienfahrzeugen vorgenommen werden.

Insbesondere wird gemäß dem vorliegenden Verfahren kein Sensor an einer Vorderachse des Kraftfahrzeugs zum Erfassen eines Einfederwegs benötigt. Stattdessen kann dieser Einfederweg einer Stahlfeder, zum Beispiel einer Blattfeder, oder ähnlichem basierend auf bekannten Werten der Fahrzeuggeometrie (zum Beispiel Radstand, Sattelvormaß) und einer auf Basis des erfassten Druckwerts ermittelten Hinterachslast ermittelt werden. Es ist allerdings auch möglich, einige oder alle Zwischenschritte wegzulassen und bspw. direkt von dem mindestens einen erfassten Druckwert auf eine gewünschte Einstellung des Scheinwerfers zu schließen, wie hierin noch detaillierter beschrieben ist.

Insbesondere kann der Druckwert ein absoluter Druckwert oder ein relativer Druckwert (eine Druckwertveränderung) sein.

In einer bevorzugten Ausführungsform weist der Schritt des Erfassens mindestens eines Druckwerts der Hinterachsluftfederanlage ein Erfassen eines ersten Druckwerts eines ersten Luftfederbalgs der Hinterachsluftfederanlage und ein Erfassen eines zweiten Druckwerts eines zweiten Luftfederbalgs der Hinterachsluftfederanlage auf. Der erste Luftfederbalg und der zweite Luftfederbalg sind an einander gegenüberliegenden Fahrzeuglängsseiten des Kraftfahrzeugs angeordnet. Damit kann auch der Einfluss einer unsymmetrischen Lastverteilung vom Verfahren berücksichtigt werden.

Alternativ kann es auch möglich sein, dass der Schritt des Erfassens mindestens eines Druckwerts der Hinterachsluftfederanlage ein Erfassen eines Druckwerts eines Luftfederbalgs der Hinterachsluftfederanlage auf lediglich einer Fahrzeuglängsseite des Kraftfahrzeugs aufweist. Insbesondere bei symmetrischer Lastverteilung liefert ein derartiges Verfahren gute Ergebnisse und ist besonders einfach auszuführen.

In einem besonders bevorzugten Ausführungsbeispiel ist die Hinterachsluftfederanlage eine elektronisch gesteuerte Hinterachsluftfederanlage und der mindestens eine Druckwert wird von mindestens einem Drucksensor der elektronisch gesteuerten Hinterachsluftfederanlage erfasst. Eine derartige elektronische Hinterachsluftfederanlage ist beispielsweise in Sattelzugmaschinen und Lastkraftwagen vom BL (Blatt-Luft)-Typ bereits vorhanden. Beim BL-Typ ist an der Vorderachse eine Stahlblattfeder und an der Hinterachse eine Luftfederanlage verbaut. Damit kann das Verfahren auf Komponenten zurückgreifen, die bereits vorhanden sind. Somit müssen keine zusätzlichen Komponenten vorgesehen werden, die das Ausführen des Verfahrens ermöglichen.

In einem weiteren Ausführungsbeispiel wird das Erfassen des mindestens einen Druckwerts von einem Steuergerät der Hinterachsluftfederanlage gesteuert. Zusätzlich wird das Verändern der Leuchtweite des Scheinwerfers basierend auf dem mindestens einen erfassten Druckwert von einem anderen Steuergerät, insbesondere einem zentralen Steuergerät, des Kraftfahrzeugs, gesteuert. Dies ermöglicht eine besonders einfache Implementierung des Verfahrens, da keine Veränderung des bereits vorhandenen Steuergeräts der Hinterachsluftfederanlage benötigt wird. Stattdessen wird ein Signal, das dem erfassten Druckwert entspricht, an ein anderes Steuergerät weitergeleitet, das speziell zum Ausführen des Verfahrens konfiguriert ist. Hier eignet sich insbesondere das zentrale Steuergerät des Kraftfahrzeugs, da dieses bereits einen Ausgang zum Ansteuern des Aktors des Scheinwerfers aufweisen kann. Insofern wären keine hardwareseitigen Anpassungen zum Implementieren des Verfahrens notwendig.

In einem alternativen Ausführungsbeispiel wird das Erfassen des mindestens einen Druckwerts und das Verändern der Leuchtweite des Scheinwerfers basierend auf dem mindestens einen erfassten Druckwert von einem Steuergerät der Hinterachsluftfederanlage gesteuert. Dies hat den Vorteil, dass das Verfahren nur ein einziges Steuergerät zum Ausführen verwendet.

In einer besonders bevorzugten Ausführungsform ist eine Vorderachse des Kraftfahrzeugs ohne Vorderachsluftfederanlage vorgesehen. Alternativ oder zusätzlich weist eine Vorderachse des Kraftfahrzeugs Stahlfedern, insbesondere Blattfedern, auf. Dies ermöglicht insbesondere die Berechnung eines Einfederwegs der Stahlfedern der Vorderachse basierend auf einer für die verbauten Stahlfedern bekannten Federkennlinie gemäß der Hooke'schen Federkennung, wenn das Verfahren in einem Zwischenschritt eine Vorderachslast bzw. eine auf die Vorderachse wirkende Vorderachsgewichtskraft ermittelt hat.

In einer weiteren Ausführungsform werden das Erfassen mindestens eines Druckwerts der Hinterachsluftfederanlage und das Verändern der Leuchtweite des Scheinwerfers basierend auf dem mindestens einen erfassten Druckwert während einer Fahrt des Kraftfahrzeugs ausgeführt. Damit können beispielsweise auch Veränderungen der Nutzlast, zum Beispiel bei Salzstreufahrzeugen oder Müllsammelfahrzeugen, und deren Einfluss auf den Nickwinkel des Kraftfahrzeugs von dem Verfahren berücksichtigt werden.

In einer Ausführungsvariante weist das Verändern der Leuchtweite des Scheinwerfers basierend auf dem mindestens einen erfassten Druckwert eine Mehrzahl von Schritten auf. In einem Schritt wird eine an der Hinterachse wirkende Hinterachsgewichtskraft und/oder Hinterachslast des Kraftfahrzeugs basierend auf dem mindestens einen erfassten Druckwert ermittelt (z. B. berechnet). In einem weiteren Schritt wird eine an einer Vorderachse des Kraftfahrzeugs wirkende Vorderachsgewichtskraft und/oder Vorderachsgewichtslast des Kraftfahrzeugs basierend auf einem vorbestimmten oder geschätzten Schwerpunkt des Kraftfahrzeugs und der ermittelten Hinterachsgewichtskraft und/oder Hinterachslast ermittelt (z. B. berechnet). In einem weiteren Schritt wird ein Einfederweg einer Stahlfeder, insbesondere einer Blattfeder, der Vorderachse basierend auf einer vorbestimmten Federkennlinie der Stahlfeder der Vorderachse und der ermittelten Vorderachsgewichtskraft und/oder Vorderachslast ermittelt (z. B. berechnet). In einem weiteren Schritt wird ein Nickwinkel des Kraftfahrzeugs basierend auf dem ermittelten Einfederweg ermittelt (z. B. berechnet). In einem weiteren Schritt wird die Leuchtweite des Scheinwerfers basierend auf dem ermittelten Nickwinkel verändert. Die Schritte können explizit ausgeführt und die genannten Zwischenergebnisse berechnet werden. Es ist allerdings auch möglich, die Schritte implizit ohne Berechnung von Zwischenergebnissen durchzuführen.

In einer Weiterbildung ist das Kraftfahrzeug eine Sattelzugmaschine und der Schwerpunkt des Kraftfahrzeugs ist vorbestimmt. Der vorbestimmte Schwerpunkt kann in einem Steuergerät gespeichert sein. Insbesondere bei BL-Sattelzugmaschinen sind der Schwerpunkt der Sattelzugmaschine und der Lasteinleitungspunkt über die Sattelkupplung eindeutig definiert.

Alternativ kann das Kraftfahrzeug beispielsweise ein Lastkraftwagen sein und der Schwerpunkt des Kraftfahrzeugs geschätzt werden, insbesondere mittels eines Massenschätzers des Kraftfahrzeugs. Der Massenschätzer kann vorzugsweise basierend auf mindestens einer erfassten Beschleunigung und/oder Verzögerungen des Kraftfahrzeugs und einer erfassten Motorantriebsleistung des Kraftfahrzeugs einen Schwerpunkt des Kraftfahrzeugs schätzen. Insbesondere bei BL- Lastkraftwagen (mit Aufbau) ist zwar der Schwerpunkt des Lastkraftwagens bekannt, nicht aber der Schwerpunkt der Nutzlast, sodass ein Gesamtschwerpunkt auf geeignete Weise abgeschätzt werden sollte. Hierzu kann der Massenschätzer verwendet werden, der im Kraftfahrzeug bereits zum Ausführen von anderen Aufgaben (z. B. angepasste Steuerung des Bremseingriffs) vorhanden sein kann, sodass keine zusätzlichen Systeme benötigt werden.

In einer weiteren Ausführungsform weist das Verfahren ferner ein Abgleichen der ermittelten Hinterachsgewichtskraft, der ermittelten Hinterachslast, der ermittelten Vorderachsgewichtskraft und/oder der ermittelten Vorderachslast mittels eines Massenschätzers des Kraftfahrzeugs auf, der basierend auf mindestens einer erfassten Beschleunigung und/oder Verzögerungen des Kraftfahrzeugs und einer erfassten Motorantriebsleistung des Kraftfahrzeugs eine Gesamtgewichtskraft, eine Gesamtlast, einen Schwerpunkt, eine Vorderachsgewichtskraft, eine Vorderachslast, eine Hinterachsgewichtskraft und/oder eine Hinterachslast des Kraftfahrzeugs schätzt. Damit kann das Verfahren plausibilisiert werden. Hierzu kann ebenfalls der bereits vorhandene Massenschätzer verwendet werden, sodass keine zusätzlichen Systeme benötigt werden. Die Plausibilisierung erfolgt unter Zuhilfenahme von redundanten, physikalisch unabhängigen Eingangsgrößen des Masseschätzers.

In einer Ausführungsvariante schätzt der Masseschätzer iterativ. Das bedeutet, der Masseschätzer führt schrittweise wiederholte Rechengänge durch, um sich einer möglichst exakten Lösung schrittweise anzunähern. Hierbei werden mehrere erfasste Beschleunigungen und/oder Verzögerungen sowie Motorantriebsleistungen berücksichtigt, die nach und nach während der Fahrt erfasst werden. Die Schätzung verbessert sich somit mit zunehmender Fahrtdauer.

In einem weiteren Ausführungsbeispiel weist der Schritt des Veränderns der Leuchtweite des Scheinwerfers basierend auf dem mindestens einen erfassten Druckwert insbesondere nur zwei Schritte auf. In einem ersten Schritt wird eine gewünschten Einstellung der Leuchtweite des Scheinwerfers basierend auf einer vorbestimmten (vordefinierten) Zuordnung, insbesondere einer vorbestimmten Tabelle, einer vorbestimmten Formel, einer vorbestimmten Kennlinie und/oder einem vorbestimmten Kennfeld, ermittelt, insbesondere direkt ermittelt, wobei die vorbestimmte Zuordnung die gewünschte Einstellung in Abhängigkeit von dem mindestens einen erfassten Druckwert angibt. In einem zweiten Schritt wird bereits die Leuchtweite des Scheinwerfers basierend auf der gewünschten Einstellung verändert. Damit kann auf besonders einfache Weise ein nur wenige Schritte aufweisendes Verfahren zur Leuchtweitenregulierung des Scheinwerfers vorgesehen werden.

In einer Weiterbildung ist die vordefinierte Zuordnung empirisch ermittelt und, insbesondere, in einem Steuergerät des Kraftfahrzeugs abgespeichert. Das Steuergerät kann beispielsweise das Steuergerät der Hinterachsluftfederanlage oder das zentrale Steuergerät des Kraftfahrzeugs sein.

Die Erfindung betrifft auch eine Vorrichtung zur Einstellung einer Leuchtweite eines Scheinwerfers eines Kraftfahrzeugs, insbesondere eines Nutzfahrzeugs. Die Vorrichtung weist eine Hinterachsluftfederanlage für einer Hinterachse des Kraftfahrzeugs zur Niveauregulierung der Hinterachse auf, wobei die Hinterachsluftfederanlage mindestens einen Drucksensor aufweist. Die Vorrichtung weist einen verstellbaren Scheinwerfer auf. Die Vorrichtung weist mindestens ein Steuergerät, das zum Ausführen des Verfahrens wie hierin offenbart ausgebildet ist, auf. Das Steuergerät ist mit dem mindestens einen Drucksensor und dem Scheinwerfer verbunden. Der mindestens eine Drucksensor erfasst den mindestens einen Druckwert. Mit der Vorrichtung können die gleichen Vorteile wie mit dem Verfahren erzielt werden.

Die betrifft auch ein Kraftfahrzeug, insbesondere Nutzfahrzeug, mit einer Vorrichtung wie hierin offenbart.

In einer Weiterbildung ist das Kraftfahrzeug eine Sattelzugmaschine oder ein Lastkraftwagen (mit Aufbau).

Es ist auch möglich, die Vorrichtung wie hierin offenbart für Personenkraftwagen, geländegängige Fahrzeuge usw. zu verwenden.

Wie hierin verwendet, bezieht sich der Begriff "Steuergerät" auf eine Elektronik, die je nach Ausbildung Steuerungsaufgaben und/oder Regelungsaufgaben übernehmen kann.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

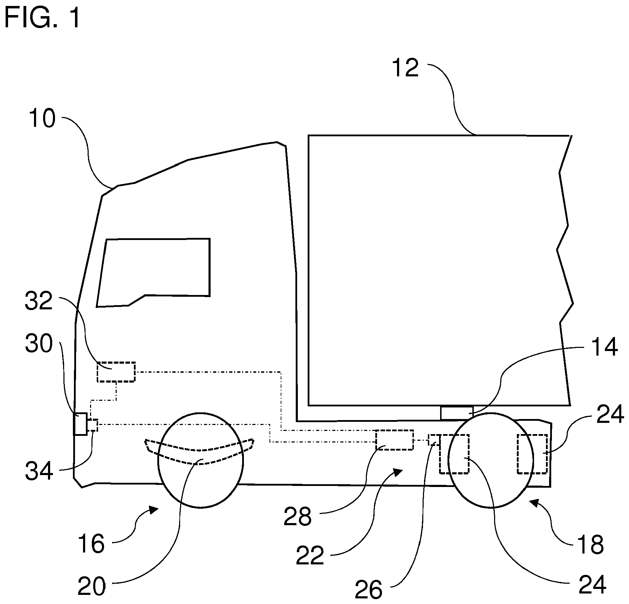

Figur 1    eine schematische Seitenansicht eines Nutzfahrzeugs.

In Figur 1 ist ein Kraftfahrzeug 10 gezeigt. Das Kraftfahrzeug 10 ist als Sattelzugmaschine zum Ziehen eines Sattelaufliegers 12 über einen Königszapfen 14 ausgebildet. Es ist allerdings auch möglich, dass das Kraftfahrzeug anders ausgebildet ist, zum Beispiel als Lastkraftwagen mit einem Aufbau.

Das Kraftfahrzeug 10 weist eine Vorderachse 16 und eine Hinterachse 18 auf.

Die Vorderachse 16 ist insbesondere über ein Stahlfedern 20, beispielsweise Stahlblattfedern, gefedert.

Die Hinterachse 18 weist eine Hinterachsluftfederanlage 22 auf. Die Hinterachsluftfederanlage 22 ist als eine elektronisch gesteuerte Hinterachsluftfederanlage (ECAS - System: Electronically Controlled Air Suspension) zur Niveauregulierung der Hinterachse 18 ausgebildet. Die Hinterachsluftfederanlage 22 weist mehrere Luftfederbälge 24, mindestens einen Drucksensor 26 und ein Steuergerät 28 auf.

Die Luftfederbälge 24 sind an beiden Radseiten der Hinterachse 18 (nur eine Radseite in Figur 1 dargestellt) angeordnet. Über ein Zuführen oder Ablassen von Druckluft kann über die Luftfederbälge 24 ein Höhenniveau der Hinterachse 18 verstellt werden. Damit kann bspw. ein gleich bleibendes Höhenniveau der Hinterachse bei unterschiedlichen Lasten des Sattelaufliegers 12 eingestellt und das Ab- und Aufsatteln des Sattelaufliegers 12 einfacher vorgenommen werden.

Das Steuergerät 28 ist zur Steuerung der Hinterachsluftfederanlage 22 ausgebildet. Beispielsweise steuert das Steuergerät 28 die Zu- und Abfuhr von Druckluft zu den Luftfederbälgen 24 über das Öffnen und Schließen von entsprechenden Ventilen. Zusätzlich ist das Steuergerät 28 mit dem mindestens einen Drucksensor 26 zum Empfangen von Signalen von dem mindestens einen Drucksensor 26 verbunden. Der mindestens eine Drucksensor 26 erfasst (misst) einen (Luft-)Druck in mindestens einem der Luftfederbälge 24 und sendet ein entsprechendes Signal an das Steuergerät 28.

Das Kraftfahrzeug 10 weist zusätzlich mindestens einen einstellbaren Scheinwerfer 30 und ein zentrales Steuergerät 32 für zentrale Steuerungsaufgaben des Kraftfahrzeugs 10 auf. Der Scheinwerfer 30 ist über einen verbundenen Aktor 34, zum Beispiel einen Stellmotor, verstellbar. Somit kann ein Neigungswinkel des Scheinwerfers 30 oder eines Reflektors des Scheinwerfers 30 über den Aktor 34 zur Leuchtweitenregulierung eingestellt werden.

Nachfolgend sind besonders einfache Verfahren und Vorrichtungen zum Einstellen des Scheinwerfers 32 der Sattelzugmaschine 10 beschrieben.

Zunächst wird ein Druckwert des Luftfederbalgs 24 von dem Drucksensor 26 erfasst. Hier kann beispielsweise ein Druckwert von einem Luftfederbalg 24 auf nur einer Radseite der Hinterachse 18 erfasst werden. Für ein genaueres Verfahren besteht allerdings auch die Möglichkeit, dass ein Druckwert von einem Luftfederbalg 24 auf einer Radseite der Hinterachse 18 und ein Druckwert von einem Luftfederbalg 24 auf einer gegenüberliegenden Radseite der Hinterachse 18 von zwei entsprechenden Drucksensoren 26 erfasst werden. D. h., es werden Druckwerte von Luftfederbälgen auf beiden Fahrzeuglängsseiten erfasst. Hiermit können insbesondere unsymmetrische Lastverteilungen erkannt und berücksichtigt werden. Die Erfassung von einem Druckwert eines Luftfederbalgs 24 auf nur einer Radseite der Hinterachse 18 kann ebenfalls zuverlässige Werte für das Verfahren insbesondere bei symmetrischer Lastverteilung auf die Hinterachse 18 liefern. Der Druckwert kann ein absoluter Druckwert oder ein relativer Druckwert, d. h. eine Druckwertveränderung, sein.

Der oder die erfassten Druckwerte werden von dem mindestens einen Drucksensor 26 zu dem Steuergerät 28 der Hinterachsluftfederanlage 22 gesendet. Nun können beispielsweise die weiteren Verfahrensschritte bis zum Ansteuern des Aktors 34 des Scheinwerfers 30 von dem Steuergerät 28 durchgeführt werden. Dafür weist das Steuergerät 28 eine Kommunikationsverbindung zu dem Drucksensor 26 und eine Kommunikationsverbindung zu dem Aktor 34 auf. Es ist allerdings auch möglich, dass beispielsweise das Steuergerät 28 der Hinterachsluftfederanlage 22 den oder die erfassten Druckwerte über eine Kommunikationsverbindung an das zentrale Steuergerät 32 des Kraftfahrzeugs 10 sendet, das wiederum über eine Kommunikationsverbindung mit dem Aktor 34 verbunden ist. Die weiteren Verfahrensschritte bis zum Ansteuern des Aktors 34 des Scheinwerfers 30 können dann von dem zentralen Steuergerät 32 durchgeführt werden, wie nachfolgend beispielhaft beschrieben ist. Es ist auch möglich, dass, je nach Aktorlogik und verwendeter Elektronikarchitektur, der Aktor 34 direkt z.B. über ein PWM-Signal angesteuert wird.

Basierend auf dem mindestens einen erfassten Druckwert ermittelt das zentrale Steuergerät 32 eine Hinterachslast an der Hinterachse 18 bzw. eine auf die Hinterachse 18 wirkende Hinterachsgewichtskraft. Hierzu können bspw. vorbestimmte Formeln, Kennfelder, Kennlinien und/oder Tabellen usw. in dem zentralen Steuergerät 32 hinterlegt sein, die eine Hinterachslast bzw. Hinterachsgewichtskraft in Abhängigkeit von dem mindestens einen erfassten Druckwert angibt.

Basierend auf der ermittelten Hinterachslast bzw. Hinterachsgewichtskraft und einer bekannten oder geschätzten Position eines Schwerpunkts des Kraftfahrzeugs 10 kann eine Vorderachslast an der Vorderachse 16 bzw. eine auf die Vorderachse 16 wirkende Vorderachsgewichtskraft ermittelt werden. Hierfür kann beispielsweise ein Kräftegleichgewicht und ein Momentengleichgewicht aufgestellt und die entsprechenden Formeln ineinander eingesetzt werden.

Zur Berechnung der Vorderachsgewichtskraft $F_{VA}$ werden lediglich ein (horizontaler) Abstand $l_1$ zwischen der Hinterachse 18 und dem Schwerpunkt, d. h. das Sattelvormaß bei einer Sattelzugmaschine, ein (horizontaler) Abstand $l_2$ zwischen der Vorderachse 16 und der Hinterachse 18, d. h. der Radstand, sowie die ermittelte Hinterachsgewichtskraft $F_{HA}$ benötigt. Die Berechnung kann nach folgender Formel erfolgen.

$$(1) \qquad F_{VA} = F_{HA} \left( \frac{l_2}{l_2 - l_1} - 1 \right)$$

mit:

$F_{VA}$ ...     Vorderachsgewichtskraft

$F_{HA}$ ...     Hinterachsgewichtskraft

$I_1$ ...     Sattelvormaß bzw. Abstand zwischen Hinterachse und Schwerpunkt

$I_2$ ...     Radstand

Der Radstand I2 ist bekannt und in dem zentralen Steuergerät 32 gespeichert.

Der Schwerpunkt des Kraftfahrzeugs 10 kann bekannt sein oder geschätzt werden. Insbesondere ist der Schwerpunkt des Kraftfahrzeugs 10 bekannt, wenn das Kraftfahrzeug 10 eine Sattelzugmaschine (wie in Figur 1 dargestellt) ist, da der Schwerpunkt der Sattelzugmaschine und der Lasteinleitungspunkt über die Sattelkupplung eindeutig definiert sind. Bei Sattelzugmaschinen ist somit das Sattelvormaß $I_1$ bekannt und in dem zentralen Steuergerät 32 gespeichert. Bei Lastkraftwagen mit Aufbau ist der Schwerpunkt mit Aufbau ebenfalls bekannt, nicht aber der Schwerpunkt der Nutzlast. Hier kann der Schwerpunkt des gesamten Kraftfahrzeugs inklusive der Nutzlast beispielsweise mittels eines Masseschätzers ermittelt werden. Der Masseschätzer kann beispielsweise basierend auf erfassten Beschleunigungen und Verzögerungen des Kraftfahrzeugs 10 sowie erfassten Motorantriebsleistungen des Kraftfahrzeugs 10 Achslasten und einen Schwerpunkt des Kraftfahrzeugs 10 iterativ ermitteln. Hierbei kann das zweite newtonsche Gesetz (Kraft ist Masse mal Beschleunigung) angewendet werden. Der Masseschätzer kann beispielsweise Teil eines Bremssystems des Kraftfahrzeugs 10 sein. Basierend auf dem geschätzten Schwerpunkt wird der Abstand $I_1$ zwischen Hinterachse und geschätztem Schwerpunkt bei Lastkraftwagen mit Aufbau ermittelt.

Basierend auf der ermittelten Vorderachslast bzw. der ermittelten Vorderachsgewichtskraft kann ein Einfederweg der beispielsweise aus Stahl hergestellten Blattfeder 20 ermittelt werden. Die Federrate bzw. Federkennlinien (Hooke'sche Federkennung) der verbauten Blattfeder 20 ist bekannt und im zentralen Steuergerät 32 hinterlegt. Daraus kann der Einfederweg der Blattfeder 20 entsprechend der ermittelten Vorderachsgewichtskraft bzw. der ermittelten Vorderachslast ermittelt werden.

Basierend auf dem ermittelten Einfederweg der Blattfeder kann dann ein Neigungswinkel bzw. Nickwinkel des Kraftfahrzeugs 10 ermittelt werden, wobei die Position der Hinterachse 18 als bekannt vorausgesetzt wird.

Letztlich kann das zentrale Steuergerät 32 den Aktor 34 des Scheinwerfers 30 entsprechend dem ermittelten Nickwinkel ansteuern, um den Neigungswinkel des Scheinwerfers 30 wie gewünscht einzustellen und damit eine Leuchtweitenregulierung des Scheinwerfers 30 vorzunehmen.

Es ist möglich, dass einige oder alle der Zwischenschritte, die zwischen der Ermittlung des mindestens einen Druckwerts der Hinterachsluftfederanlage 22 und der Verstellung des Scheinwerfers 30 ausgeführt werden, zusammengefasst werden. In einem Ausführungsbeispiel kann somit lediglich mindestens ein Druckwert der Hinterachsluftfederanlage 22 erfasst werden und basierend auf diesem Druckwert direkt eine Veränderung der Leuchtweite des Scheinwerfers 30 vorgenommen werden. Dazu kann beispielsweise eine in dem zentralen Steuergerät 32 hinterlegte, vorbestimmte Zuordnung verwendet werden, die eine gewünschte Einstellung des Scheinwerfers 30 in Abhängigkeit von dem mindestens einen erfassten Druckwert angibt. Die Zuordnung kann beispielsweise in Form einer vordefinierten Kennlinien, eines vordefinierten Kennfelds, einer vordefinierten Tabelle und/oder einer vordefinierten Formel angegeben sein. Die Zuordnung kann auch zumindest teilweise empirisch ermittelt sein und/oder sämtliche zuvor beschriebene Zwischenschritte integriert bzw. implizit und ohne Berechnung von Zwischenergebnissen (Hinterachslast, Hinterachsgewichtskraft, Schwerpunkt, Vorderachslast, Vorderachsgewichtskraft, Einfederweg, Nickwinkel) ausführen.

Es ist ebenfalls möglich, dass die Ermittlung der Hinterachslast bzw. Hinterachsgewichtskraft und der Vorderachslast bzw. Vorderachsgewichtskraft mittels des zuvor beschriebenen Masseschätzers insbesondere Ausführungsformen, in denen der Masseschätzer nicht zum Ermitteln eines Schwerpunkts benötigt wird, zu plausibilisieren. Dabei kann der Masseschätzer beispielsweise die Hinterachslast, die Hinterachsgewichtskraft, die Vorderachslast und/oder die Vorderachsgewichtskraft schätzen. Die geschätzten Werte können von dem zentralen Steuergerät 32 mit den ermittelten Werten für die Hinterachslast, die Hinterachsgewichtskraft, die Vorderachslast und über die Vorderachsgewichtskraft verglichen werden. Bei zu großen Abweichungen kann das Verfahren zum Einstellen der Leuchtweite des Scheinwerfers 30 beispielsweise neu gestartet werden.

Das hierin offenbarte Verfahren ermöglicht eine Nachregelung des Scheinwerfers 30 während der Fahrt. Dies ist insbesondere hilfreich bei Fahrzeugen mit veränderlicher Nutzlast, zum Beispiel Salzstreufahrzeuge oder Müllsammelfahrzeuge.

Das hierin offenbarte Verfahren kann auch verwendet werden, wenn das Kraftfahrzeug 10 mehrere Hinterachsen 18 aufweist. Zum Beispiel kann das Kraftfahrzeug 10 ein Doppelhinterachsaggregat (eine Tandemachse) aufweisen. In diesem Zusammenhang besteht Beispielsweise die Möglichkeit, dass das Verfahren bei Kraftfahrzeugen mit einer aktiven Anfahrhilfe verwendet wird, bei der eine Nachlaufachse des Doppelhinterachsaggregats zum Anfahren angehoben wird. Dadurch wird die Traktion auf der Triebachse des Doppelhinterachsaggregats erhöht. Somit kann das Kraftfahrzeug 10 beispielsweise auch bei schwierigen Bedingungen, zum Beispiel im Schnee, anfahren. Gemäß dem hierin offenbarten Verfahren kann dann beim Anfahren eine Hinterachslast bzw. eine Hinterachsgewichtskraft an der Triebachse ermittelt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich fallen. Das Schutzbereich der Erfindung wird durch die Ansprüche definiert.

Bezugszeichenliste

| | |
|---|---|
| 10 | Kraftfahrzeug (Sattelzugmaschine) |
| 12 | Sattelauflieger |
| 14 | Königszapfen |
| 16 | Vorderachse |
| 18 | Hinterachse |
| 20 | Stahlfeder (Stahlblattfeder) |
| 22 | Hinterachsluftfederanlage |
| 24 | Luftfederbalg |
| 26 | Drucksensor |
| 28 | Steuergerät |
| 30 | Scheinwerfer |
| 32 | Zentrales Steuergerät |
| 34 | Aktor |

**Patentansprüche**

1. Verfahren zum Einstellen einer Leuchtweite eines Scheinwerfers (30) eines Kraftfahrzeugs (10), insbesondere eines Nutzfahrzeugs, mit einer Hinterachse (18), die eine Hinterachsluftfederanlage (22) zur Niveauregulierung der Hinterachse (18) aufweist, aufweisend:

   Erfassen mindestens eines Druckwerts der Hinterachsluftfederanlage (22); und
   Verändern der Leuchtweite des Scheinwerfers (30) basierend auf dem mindestens einen erfassten Druckwert.

2. Verfahren nach Anspruch 1, wobei der Schritt des Erfassens mindestens eines Druckwerts der Hinterachsluftfederanlage (22) aufweist:

   Erfassen eines Druckwerts eines Luftfederbalgs (24) der Hinterachsluftfederanlage (22) auf lediglich einer Fahrzeuglängsseite des Kraftfahrzeugs (10); oder
   Erfassen eines ersten Druckwerts eines ersten Luftfederbalgs (24) der Hinterachsluftfederanlage (22); und
   Erfassen eines zweiten Druckwerts eines zweiten Luftfederbalgs (24) der Hinterachsluftfederanlage (22), wobei der erste Luftfederbalg (24) und der zweite Luftfederbalg (24) an einander gegenüberliegenden Fahrzeuglängsseiten des Kraftfahrzeugs (10) angeordnet sind.

3. Verfahren nach Anspruch 1 oder Anspruch 2, wobei:

die Hinterachsluftfederanlage (22) eine elektronisch gesteuerte Hinterachsluftfederanlage (22) ist und der mindestens eine Druckwert von mindestens einem Drucksensor (26) der elektronisch gesteuerten Hinterachsluftfederanlage (22) erfasst wird.

4. Verfahren nach einem der vorherigen Ansprüche, wobei

   das Erfassen des mindestens einen Druckwerts von einem Steuergerät (28) der Hinterachsluftfederanlage (22) gesteuert wird; und
   das Verändern der Leuchtweite des Scheinwerfers (30) basierend auf dem mindestens einen erfassten Druckwert von einem anderen Steuergerät, insbesondere einem zentralen Steuergerät (32), des Kraftfahrzeugs (10), gesteuert wird.

5. Verfahren nach einem der Ansprüche 1 bis 3, wobei: das Erfassen des mindestens einen Druckwerts und das Verändern der Leuchtweite des Scheinwerfers (30) basierend auf dem mindestens einen erfassten Druckwert von einem Steuergerät (28) der Hinterachsluftfederanlage (22) gesteuert wird.

6. Verfahren nach einem der vorherigen Ansprüche, wobei:

   eine Vorderachse (16) des Kraftfahrzeugs (10) ohne Vorderachsluftfederanlage vorgesehen ist; und/oder
   eine Vorderachse (16) des Kraftfahrzeugs (10) Stahlfedern (20), insbesondere Blattfedern, aufweist.

7. Verfahren nach einem der vorherigen Ansprüche, wobei: das Erfassen mindestens eines Druckwerts der Hinterachsluftfederanlage (22) und das Verändern der Leuchtweite des Scheinwerfers (30) basierend auf dem mindestens einen erfassten Druckwert während einer Fahrt des Kraftfahrzeugs (10) ausgeführt werden.

8. Verfahren nach einem der vorherigen Ansprüche, wobei das Verändern der Leuchtweite des Scheinwerfers (30) basierend auf dem mindestens einen erfassten Druckwert aufweist:

   Ermitteln einer an der Hinterachse (18) wirkenden Hinterachsgewichtskraft und/oder Hinterachslast des Kraftfahrzeugs (10) basierend auf dem mindestens einen erfassten Druckwert;
   Ermitteln einer an einer Vorderachse (16) des Kraftfahrzeugs (10) wirkenden Vorderachsgewichtskraft und/oder Vorderachsgewichtslast des Kraftfahrzeugs (10) basierend auf einem vorbestimmten oder geschätzten Schwerpunkt des Kraftfahrzeugs (10) und der ermittelten Hinterachsgewichtskraft und/oder Hinterachslast; Ermitteln eines Einfederwegs einer Stahlfeder (20), insbesondere einer Blattfeder, der Vorderachse (16) basierend auf einer vorbestimmten Federkennlinie der Stahlfeder (20) der Vorderachse (16) und der ermittelten Vorderachsgewichtskraft und/oder Vorderachslast; Ermitteln eines Nickwinkels des Kraftfahrzeugs (10) basierend auf dem ermittelten Einfederweg; und Verändern der Leuchtweite des Scheinwerfers (30) basierend auf dem ermittelten Nickwinkel.

**9.** Verfahren nach Anspruch 8, wobei:

das Kraftfahrzeug (10) eine Sattelzugmaschine ist und der Schwerpunkt des Kraftfahrzeugs (10) vorbestimmt ist; oder das Kraftfahrzeug (10) ein Lastkraftwagen ist und der Schwerpunkt des Kraftfahrzeugs (10) geschätzt ist, insbesondere mittels eines Massenschätzers des Kraftfahrzeugs (10), der vorzugsweise basierend auf mindestens einer erfassten Beschleunigung und/oder Verzögerungen des Kraftfahrzeugs (10) und einer erfassten Motorantriebsleistung des Kraftfahrzeugs (10) einen Schwerpunkt des Kraftfahrzeugs (10) schätzt.

**10.** Verfahren nach Anspruch 8 oder Anspruch 9, ferner aufweisend: Abgleichen der ermittelten Hinterachsgewichtskraft, der ermittelten Hinterachslast, der ermittelten Vorderachsgewichtskraft und/oder der ermittelten Vorderachslast mittels eines Massenschätzers des Kraftfahrzeugs (10), der basierend auf mindestens einer erfassten Beschleunigung und/oder Verzögerungen des Kraftfahrzeugs (10) und einer erfassten Motorantriebsleistung des Kraftfahrzeugs (10) eine Gesamtgewichtskraft, eine Gesamtlast, einen Schwerpunkt, eine Vorderachsgewichtskraft, eine Vorderachslast, eine Hinterachsgewichtskraft und/oder eine Hinterachslast des Kraftfahrzeugs (10) schätzt.

**11.** Verfahren nach Anspruch 9 oder Anspruch 10, wobei: der Masseschätzer iterativ schätzt.

**12.** Verfahren nach einem der Ansprüche 1 bis 7, wobei der Schritt des Veränderns der Leuchtweite des Scheinwerfers (30) basierend auf dem mindestens einen erfassten Druckwert aufweist:

direktes Ermitteln einer gewünschten Einstellung der Leuchtweite des Scheinwerfers (30) basierend auf einer vorbestimmten Zuordnung, insbesondere einer vorbestimmten Tabelle, einer vorbestimmten Formel, einer vorbestimmten Kennlinie und/oder einem vorbestimmten Kennfeld, wobei die vorbestimmte Zuordnung die gewünschte Einstellung in Abhängigkeit von dem mindestens einen erfassten Druckwert angibt; und Verändern der Leuchtweite des Scheinwerfers (30) basierend auf der gewünschten Einstellung.

**13.** Verfahren nach Anspruch 12, wobei: die vordefinierte Zuordnung empirisch ermittelt ist und, insbesondere, in einem Steuergerät des Kraftfahrzeugs (10) abgespeichert ist.

**14.** Vorrichtung zur Einstellung einer Leuchtweite eines Scheinwerfers (30) eines Kraftfahrzeugs (10), insbesondere eines Nutzfahrzeugs, aufweisend:

eine Hinterachsluftfederanlage (22) für einer Hinterachse (18) des Kraftfahrzeugs (10) zur Niveauregulierung der Hinterachse (18), wobei die Hinterachsluftfederanlage (22) mindestens einen Drucksensor (26) aufweist; einen verstellbaren Scheinwerfer (30); und mindestens ein Steuergerät (28, 32), das zum Ausführen des Verfahrens nach einem der vorherigen Ansprüche ausgebildet ist, wobei das Steuergerät (28, 32) mit dem mindestens einen Drucksensor (26) und dem Scheinwerfer (30) verbunden ist und wobei der mindestens eine Drucksensor (26) den mindestens einen Druckwert erfasst.

**15.** Kraftfahrzeug (10), insbesondere Nutzfahrzeug, vorzugsweise Sattelzugmaschine oder Lastkraftwagen, mit einer Vorrichtung nach Anspruch 14.

**Claims**

**1.** Method for adjusting a lighting range of a headlamp (30) of a motor vehicle (10), in particular of a utility vehicle, with a rear axle (18) which has a rear-axle air-spring system (22) for adjusting the level of the rear axle (18), comprising:

detecting at least one pressure value of the rear-axle air-spring system (22); and changing the lighting range of the headlamp (30) on the basis of the at least one detected pressure value.

**2.** Method according to Claim 1, wherein the step of detecting at least one pressure value of the rear-axle air-spring system (22) comprises:

detecting a pressure value of an air-spring bellows (24) of the rear-axle air-spring system (22) on merely one longitudinal side of the motor vehicle (10); or
detecting a first pressure value of a first air-spring bellows (24) of the rear-axle air-spring system (22); and
detecting a second pressure value of a second air-spring bellows (24) of the rear-axle air-spring system (22), wherein the first air-spring bellows (24) and the second air-spring bellows (24) are arranged on mutually opposite longitudinal sides of the motor vehicle (10).

3. Method according to Claim 1 or Claim 2, wherein:
the rear-axle air-spring system (22) is an electronically controlled rear-axle air-spring system (22), and
the at least one pressure value of at least one pressure sensor (26) of the electronically controlled rear-axle air-spring system (22) is detected.

4. Method according to one of the preceding claims, wherein
the detecting of the at least one pressure value is controlled by a control device (28) of the rear-axle air-spring system (22); and
the changing of the lighting range of the headlamp (30) on the basis of the at least one detected pressure value is controlled by another control device, in particular a central control device (32) of the motor vehicle (10).

5. Method according to one of Claims 1 to 3, wherein:

the detecting of the at least one pressure value and
the changing of the lighting range of the headlamp (30) on the basis of the at least one detected pressure value is controlled by a control device (28) of the rear-axle air-spring system (22).

6. Method according to one of the preceding claims, wherein:

a front axle (16) of the motor vehicle (10) is provided without a front-axle air-spring system; and/or
a front axle (16) of the motor vehicle (10) has steel springs (20), in particular leaf springs.

7. Method according to one of the preceding claims, wherein:
the detecting of at least one pressure value of the rear-axle air-spring system (22) and the changing of the lighting range of the headlamp (30) on the basis of the at least one detected pressure value are carried out during a journey of the motor vehicle (10).

8. Method according to one of the preceding claims, wherein the changing of the lighting range of the headlamp (30) on the basis of the at least one detected pressure value comprises:

determining a rear-axle weight force acting on the rear axle (18) and/or a rear-axle load of the motor vehicle (10) on the basis of the at least one detected pressure value;
determining a front-axle weight force acting on a front axle (16) of the motor vehicle (10) and/or front-axle weight load of the motor vehicle (10) on the basis of a predetermined or estimated centre of gravity of the motor vehicle (10) and the determined rear-axle weight force and/or rear-axle load;
determining a compression travel of a steel spring (20), in particular a leaf spring, of the front axle (16) on the basis of a predetermined spring characteristic of the steel spring (20) of the front axle (16) and the determined front-axle weight force and/or front-axle load;
determining a pitch angle of the motor vehicle (10) on the basis of the determined compression travel; and
changing the lighting range of the headlamp (30) on the basis of the determined pitch angle.

9. Method according to Claim 8, wherein:

the motor vehicle (10) is a tractor unit and the centre of gravity of the motor vehicle (10) is predetermined; or
the motor vehicle (10) is a lorry and the centre of gravity of the motor vehicle (10) is estimated, in particular by means of a mass estimator of the motor vehicle (10), which estimates the centre of gravity of the motor vehicle (10) preferably on the basis of at least a detected acceleration and/or decelerations of the motor vehicle (10) and a detected engine driving performance of the motor vehicle (10) .

10. Method according to Claim 8 or Claim 9, furthermore comprising:
comparing the determined rear-axle weight force, the determined rear-axle load, the determined front-axle weight force and/or the determined front-axle load by means of a mass estimator of the motor vehicle (10), which estimates an overall weight force, an overall load, a centre of gravity, a front-axle weight force, a front-axle load, a rear-axle weight force and/or a rear-axle load of the motor vehicle (10) on the basis of at least of a detected acceleration and/or decelerations of the motor vehicle (10) and a detected engine driving performance of the motor vehicle (10).

**11.** Method according to Claim 9 or Claim 10, wherein: the mass estimator provides an estimation iteratively.

**12.** Method according to one of Claims 1 to 7, wherein the step of changing the lighting range of the headlamp (30) on the basis of the at least one detected pressure value comprises:

directly determining a desired adjustment of the lighting range of the headlamp (30) on the basis of a predetermined assignment, in particular a predetermined table, a predetermined formula, a predetermined characteristic and/or a predetermined characteristic diagram, wherein the predetermined assignment specifies the desired adjustment as a function of the at least one detected pressure value; and
changing the lighting range of the headlamp (30) on the basis of the desired adjustment.

**13.** Method according to Claim 12, wherein: the predetermined assignment is determined empirically and, in particular, is stored in a control device of the motor vehicle (10).

**14.** Device for adjusting a lighting range of a headlamp (30) of a motor vehicle (10), in particular a utility vehicle, comprising:

a rear-axle air-spring system (22) for a rear axle (18) of the motor vehicle (10) for adjusting the level of the rear axle (18), wherein the rear-axle air-spring system (22) has at least one pressure sensor (26);
an adjustable headlamp (30); and
at least one control device (28, 32) which is designed for carrying out the method according to one of the preceding claims, wherein the control device (28, 32) is connected to the at least one pressure sensor (26) and to the headlamp (30), and wherein the at least one pressure sensor (26) detects the at least one pressure value.

**15.** Motor vehicle (10), in particular utility vehicle, preferably tractor unit or lorry, with a device according to Claim 14.

## Revendications

**1.** Procédé de réglage d'une portée d'éclairement d'un phare (30) d'un véhicule automobile (10), en particulier d'un véhicule utilitaire, comportant un essieu arrière (18) qui comprend un système de suspension pneumatique (22) d'essieu arrière pour le réglage du niveau de l'essieu arrière (18), comprenant :

la détection d'au moins une valeur de pression du système de suspension pneumatique (22) d'essieu arrière ; et
la modification de la portée d'éclairement du phare (30) sur la base de ladite au moins une valeur de pression détectée.

**2.** Procédé selon la revendication 1, dans lequel l'étape de détection d'au moins une valeur de pression du système de suspension pneumatique (22) d'essieu arrière comprend :

la détection d'une valeur de pression d'un soufflet de suspension pneumatique (24) du système de suspension pneumatique (22) d'essieu arrière sur seulement un côté longitudinal du véhicule automobile (10) ; ou
la détection d'une première valeur de pression d'un premier soufflet de suspension pneumatique (24) du système de suspension pneumatique (22) d'essieu arrière ; et
la détection d'une deuxième valeur de pression d'un deuxième soufflet de suspension pneumatique (24) du système de suspension pneumatique (22) d'essieu arrière, le premier soufflet de suspension pneumatique (24) et le deuxième soufflet de suspension pneumatique (24) étant disposés sur des côtés longitudinaux opposés l'un à l'autre du véhicule automobile (10).

**3.** Procédé selon la revendication 1 ou la revendication 2, dans lequel :
le système de suspension pneumatique (22) d'essieu arrière est un système de suspension pneumatique (22) d'essieu arrière à commande électronique et ladite au moins une valeur de pression est détectée par au moins un capteur de pression (26) du système de suspension pneumatique (22) d'essieu arrière à commande électronique.

**4.** Procédé selon l'une des revendications précédentes, dans lequel
la détection de ladite au moins une valeur de pression est commandée par un appareil de commande (28) du système de suspension pneumatique (22) d'essieu arrière ; et
la modification de la portée d'éclairement du phare (30) sur la base de ladite au moins une valeur de pression détectée est commandée par un autre appareil de commande, en particulier un appareil de commande central (32), du véhicule automobile (10).

**5.** Procédé selon l'une des revendications 1 à 3, dans lequel :
la détection de ladite au moins une valeur de pression et la modification de la portée d'éclairement du phare (30) sur la base de ladite au moins une valeur de pression détectée sont commandées par un appareil de commande (28) du système de suspension pneumatique (22) d'essieu arrière.

6. Procédé selon l'une des revendications précédentes, dans lequel :

un essieu avant (16) du véhicule automobile (10) sans système de suspension pneumatique d'essieu avant est prévu ; et/ou
un essieu avant (16) du véhicule automobile (10) comprend des ressorts en acier (20), en particulier des ressorts à lames.

7. Procédé selon l'une des revendications précédentes, dans lequel :
la détection d'au moins une valeur de pression du système de suspension pneumatique (22) d'essieu arrière et la modification de la portée d'éclairement du phare (30) sur la base de ladite au moins une valeur de pression détectée sont effectuées pendant une conduite du véhicule automobile (10).

8. Procédé selon l'une des revendications précédentes, dans lequel la modification de la portée d'éclairement du phare (30) sur la base de ladite au moins une valeur de pression détectée comprend :

la détermination d'un poids d'essieu arrière agissant sur l'essieu arrière (18) et/ou de la charge d'essieu arrière du véhicule automobile (10) sur la base de ladite au moins une valeur de pression détectée ;
la détermination d'un poids d'essieu avant agissant sur un essieu avant (16) du véhicule automobile (10) et/ou de la charge de poids d'essieu avant du véhicule automobile (10) sur la base d'un centre de gravité prédéfini ou estimé du véhicule automobile (10) et du poids d'essieu arrière et/ou de la charge d'essieu arrière déterminés ;
la détermination d'une course de débattement d'un ressort en acier (20), en particulier d'un ressort à lame, de l'essieu avant (16) sur la base d'une courbe caractéristique prédéfinie du ressort en acier (20) de l'essieu avant (16) et du poids d'essieu avant et/ou de la charge d'essieu avant déterminés ;
la détermination d'un angle de tangage du véhicule automobile (10) sur la base de la course de débattement déterminée ; et
la modification de la portée d'éclairement du phare (30) sur la base de l'angle de tangage déterminé.

9. Procédé selon la revendication 8, dans lequel :

le véhicule automobile (10) est un tracteur pour semi-remorque et le centre de gravité du véhicule automobile (10) est prédéfini ; ou
le véhicule automobile (10) est un poids lourd et le centre de gravité du véhicule automobile (10) est estimé, en particulier au moyen d'un estimateur de masse du véhicule automobile (10), lequel estime un centre de gravité du véhicule automobile (10) de préférence sur la base d'au moins une accélération détectée et/ou de décélérations du véhicule automobile (10) et d'une puissance d'entraînement de moteur détectée du véhicule automobile (10).

10. Procédé selon la revendication 8 ou la revendication 9, comprenant en outre :
la comparaison du poids d'essieu arrière déterminé, de la charge d'essieu arrière déterminée, du poids d'essieu avant déterminé et/ou de la charge d'essieu avant déterminée au moyen d'un estimateur de masse du véhicule automobile (10), lequel estime un poids total, une charge totale, un centre de gravité, un poids d'essieu avant, une charge d'essieu avant, un poids d'essieu arrière et/ou une charge d'essieu arrière du véhicule automobile (10) sur la base d'au moins une accélération détectée et/ou de décélérations du véhicule automobile (10) et d'une puissance d'entraînement de moteur détectée du véhicule automobile (10).

11. Procédé selon la revendication 9 ou la revendication 10, dans lequel :
l'estimateur de masse estime de manière itérative.

12. Procédé selon l'une des revendications 1 à 7, dans lequel l'étape de modification de la portée d'éclairement du phare (30) sur la base de ladite au moins une valeur de pression détectée comprend :

la détermination directe d'un réglage souhaité de la portée d'éclairement du phare (30) sur la base d'une association prédéfinie, en particulier d'une table prédéfinie, d'une formule prédéfinie, d'une courbe caractéristique prédéfinie et/ou d'une cartographie prédéfinie, l'association prédéfinie indiquant le réglage souhaité en fonction de ladite au moins une valeur de pression détectée ; et
la modification de la portée d'éclairement du phare (30) sur la base du réglage souhaité.

13. Procédé selon la revendication 12, dans lequel :
l'association prédéfinie est déterminée de manière empirique et est, en particulier, mémorisée dans un appareil de commande du véhicule automobile (10).

14. Dispositif de réglage d'une portée d'éclairement d'un phare (30) d'un véhicule automobile (10), en particulier d'un véhicule utilitaire, comprenant :

un système de suspension pneumatique (22) pour un essieu arrière (18) du véhicule automobile (10) pour le réglage du niveau de l'essieu arrière (18), le système de suspension pneumatique (22) d'essieu arrière comprenant au moins un capteur de pression (26) ;

un phare réglable (30) ; et

au moins un appareil de commande (28, 32) qui est conçu pour mettre en œuvre le procédé selon l'une des revendications précédentes, l'appareil de commande (28, 32) étant relié audit au moins un capteur de pression (26) et au phare (30) et ledit au moins un capteur de pression (26) détectant ladite au moins une valeur de pression.

15. Véhicule automobile (10), en particulier véhicule utilitaire, de préférence tracteur pour semi-remorque ou poids lourd, comprenant un dispositif selon la revendication 14.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011081395 A1
- DE 10224522 A1
- DE 102015003590 A1